# EUROPEAN PATENT APPLICATION

(11) **EP 4 837 821 A1**
(43) Date of publication of application: **11.11.2026**
(21) Application number: 26176417.9
(22) Date of filing: 05.05.2026
(51) Int. Cl.: B62D 25/02, B62D 25/04

(54) **A PRESSED BODYSIDE PANEL ASSEMBLY**

(30) Priority: 09.05.2025 GB 202507101
(71) Applicant: Jaguar Land Rover Limited, Coventry, Warwickshire CV3 4LF (GB)
(72) Inventor: Wyllie-Howkins, Richard, Coventry, CV3 4LF (GB); Leach, Martin, Coventry, CV3 4LF (GB); Nattrass, Ivor, Coventry, CV3 4LF (GB); West, Darren, Coventry, CV3 4LF (GB); Campbell, Nicholas, Coventry, CV3 4LF (GB)
(74) Representative: Jaguar Land Rover Patents Department

(57) **Abstract**

Aspects of the present invention relate to a pressed bodyside panel assembly (100), a vehicle (1) and a method (400). The pressed bodyside panel assembly (100) comprises: an upper bodyside panel (110, 210, 310, 110B, 210B, 310B) comprising at least two upper pillar regions (112, 114, 116, 118), and a lower bodyside panel (140, 240, 340) comprising at least two lower pillar regions (142, 144, 146, 148), the upper bodyside panel and lower bodyside panel are discrete, and wherein each of the two upper pillar regions is connected to a respective one of the two lower pillar regions to form the pressed bodyside panel assembly.

## Description

### TECHNICAL FIELD

The present disclosure relates to a pressed bodyside panel assembly. Aspects of the invention relate to a pressed bodyside panel assembly, to a vehicle, and to a method.

### BACKGROUND

It is known to provide bodyside panels on a vehicle to cover portions of the substructure or frame of the vehicle. A bodyside panel can provide structural support and contributes to the aerodynamics and aesthetics of the vehicle. Bodyside panels are formed of two or more individual panels which are joined together with the join occurring between a front bodyside panel section and rear bodyside panel section. The front and rear bodyside panel sections are joined at one of the door apertures with a first connection point at the top or roof portion of the panels and a second connection point at the bottom or door sill portion of the panels.

It is an aim of the present invention to address one or more of the disadvantages associated with the prior art.

### SUMMARY OF THE INVENTION

Aspects and embodiments of the invention provide a pressed bodyside panel assembly, a vehicle, and to a method as claimed in the appended claims

According to an aspect of the invention, there is provided a pressed bodyside panel assembly for a vehicle comprising:
an upper bodyside panel comprising at least two upper pillar regions, and
a lower bodyside panel comprising at least two lower pillar regions,
the upper bodyside panel and lower bodyside panel are discrete, and
wherein each of the two upper pillar regions is connected to a respective one of the two lower pillar regions to form the pressed bodyside panel assembly.

By joining the upper and lower bodyside panels together at the two pillar regions there is provided an alternative means of joining two bodyside panels together. Moreover, by providing a separate upper and lower bodyside panel the upper panel and lower panel the manufacturing parameters and resultant materials properties can be tailored for the upper panel and the lower panel. For example, the upper panel may be made of a thinner sheet material than the lower panel or vice versa. Further by providing a lower panel and separate upper panel the lower panel may be utilised with different shaped upper panels or vice versa, as such, the ability to connect the upper and lower bodyside panels together in this fashion the inventors have found that there is greater flexibility and design freedom for manufacturing vehicles. As each upper or lower bodyside panel could be utilised with a different respective lower or upper bodyside panel this can save costs associated with making new pressing tools.

The inventors have also found that by connecting the bodyside panel together from an upper and lower bodyside panel the resultant bodyside panel can be manufactured to a greater length than was previously possible. By connecting the upper and lower panels via the pillar portions there may be a reduction in material being deformed in one direction (e.g. a y-axis) as compared to one or more other axis (x-axis and z-axis for example) which as a result enables greater fidelity of surfaces (such as class A surfaces) located on the lower bodyside panel or the upper bodyside panel.

According to an additional aspect of the invention, there is provided a pressed bodyside panel assembly for a vehicle comprising:
an upper bodyside panel comprising at least two upper pillar regions, and
a lower bodyside panel comprising at least two lower pillar regions, and
wherein each of the two upper pillar regions is connected to a respective one of the two lower pillar regions to form the pressed bodyside panel assembly.

The additional aspect has at least the same advantages as the previous aspect.

According to either or both the aspect and additional aspect of the invention, there are provided a number of optional features as set out below:
Optionally, wherein the upper bodyside panel is an outer bodyside panel. By being an outer bodyside panel the upper bodyside panel is an outermost part of the vehicle.

Optionally, wherein the lower bodyside panel is an outer bodyside panel. By being an outer bodyside panel the lower bodyside panel is an outermost part of the vehicle.

Optionally, wherein each upper pillar region comprises one or more of: a landing area for connection to a lower pillar region, a part of the upper pillar region. The landing area may provide a space to receive a part of the lower pillar region. The part of the upper pillar region may provide a portion that may be received by a landing area of a lower pillar region.

Optionally, wherein each lower pillar region comprises one or more of: a landing area for connection to an upper pillar region, a part of the lower pillar region. The landing area may provide a space to receive a part of the upper pillar region. The part of the lower pillar region may provide a portion that may be received by a landing area of a upper pillar region.

Optionally, wherein the pressed bodyside panel comprises at least three lower pillar portions, wherein each of the three lower pillar portions are suitable for connection to a respective upper pillar portion to connect the lower bodyside panel to an upper bodyside panel. By providing the three lower pillar portions and upper pillar portions the bodyside panel can be utilised with a three-pillar vehicle without additional panels being added.

Optionally, wherein the pressed bodyside panel comprises the lower bodyside panel and an upper bodyside panel comprising at least three upper pillar portions, and wherein each of the three upper pillar portions connects to one of the three lower pillar portions to connect the upper bodyside panel to the lower bodyside panel. By providing the three lower pillar portions and upper pillar portions the bodyside panel can be utilised with a three pillar vehicle without additional panels being added.

Optionally, wherein the lower bodyside panel includes a class A surface. By providing a class A surface on the lower bodyside panel greater control over the pressing quality in that region may be achieved.

A class A surface is one which is visible during normal use to the customer and are not normally hidden. A bonnet, fender and quarter panel are all examples of class A surfaces which are visible in normal use.

Optionally, wherein the class A surface is located on an outer surface of the lower bodyside panel. By providing the class A surface on an outer surface of the lower bodyside panel it may be visible during normal use.

Optionally, wherein the class A surface is a fender. By providing a fender region as the class A surface region one the largest class A surface on the side of the vehicle (that is not part of a door) may be formed during the manufacture of the pressed bodyside panel. As a result, there may be no need to attach a body panel to the pressed bodyside panel to cover the fender region. The result may be a reduction in number of components and/or reduction in cost for manufacturing due to the reduction in parts required for assembly of a vehicle.

Optionally, wherein the lower bodyside panel comprises a fender. Optionally wherein the class A surface is a surface of the fender.

Optionally wherein the fender is a rear fender. Optionally where the fender is a front fender.

Optionally, wherein lower bodyside panel has a lower bodyside region defined by:
a door region,
a wheel arch region,
a vehicle light region,
a waistline split region,
a bumper region, and
one of a tailgate region or a bonnet region.

The lower bodyside region may therefore provide a class A surface that extends across a large portion of the vehicle bodyside panel as such providing a single large surface reducing the number of split lines on the vehicle. "Defined by" may mean "bounded by", as in the fender region is bounded by the door region, wheel arch region, vehicle light region, waistline split region, bumper region and one of a tailgate region or a bonnet region.

The lower bodyside region may be a fender. The fender may be a front fender, in such a case the fender is defined by the bonnet region and not the tailgate region. The fender may be a rear fender, in such a case the fender is defined by the tailgate region and not the bonnet region. Optionally the tailgate region may be a boot region of the vehicle.

Optionally, door region may form a portion of a door aperture that in use a door is located. By forming a portion of the door aperture a reduced number of panels may be required to define the door aperture.

Optionally, the waistline split region may be a line, a demarcation or a crease defined by the connection between the upper and lower pressed bodyside panels. By providing such a waistline split region it may improve the aerodynamic qualities of the vehicle.

Optionally, wherein the lower bodyside region comprises the A surface. By having the lower bodyside region comprise the A-surface there may be an increase in surface fidelity of the A surface.

Optionally, wherein the class A surface extends unbroken across the whole lower bodyside region. By extending unbroken across the lower bodyside region an aesthetically pleasing class A surface is provided comprising a single surface which may not have lines disrupting it. Provision of an unbroken surface may improve aerodynamics across the fender region by providing a smooth surface for air to pass across. Provision of a smooth surface may reduce wind noise experienced when the vehicle comprising the unbroken surface is in motion.

Optionally, wherein the vehicle light region comprises an aperture for receipt of a portion of a vehicle lighting assembly in use, and the class A surface surrounds or partially surrounds the aperture. By providing a class A surface that surrounds or partially surrounds the aperture a more aesthetically pleasing vehicle may be provided. By providing such a class A surface there may be a reduction of additional body panels affixed to the final vehicle.

Optionally, wherein a rearward edge of the class A surface is parallel to a plane including a laterally outermost portion of the class A surface. By providing such a class A surface this reduces the number of split lines between body panels on the final vehicle and may provide a more aesthetically pleasing vehicle.

Optionally, the rearward edge of the class A surface may also be the laterally innermost portion or edge of the class A surface. The rearward edge may therefore extend up to the tailgate region of the vehicle to provide a single unbroken surface. Moreover, the rear bumper or rear bumper panel may be reduced in size for such a vehicle comprising the feature.

Optionally, wherein a frontward edge of the class A surface region is parallel to a plane including a laterally outermost portion of the class A surface region. By providing such a class A surface this reduces the number of split lines between body panels on the final vehicle and may provide a more aesthetically pleasing vehicle.

Optionally, wherein the frontward edge of the class A surface may also be the laterally innermost portion or edge of the class A surface. The frontward edge may therefore extend up to the bonnet region of the vehicle to provide a single unbroken surface. Moreover, the front bumper or front bumper panel may be reduced in size for such a vehicle comprising the feature.

Optionally, wherein the lower bodyside region comprises the only Class A surface of the lower bodyside panel or of the pressed bodyside panel assembly. By providing a single class A surface region greater control over the pressing quality in that single region may be achieved.

Optionally, wherein one or both of an outer surface of the upper bodyside panel and lower bodyside panel define a class B surface. Providing a class B surface may reduce the number of additional components that are connected to the panel, such as trim elements that may be used to cover class C surfaces.

A class B surface is a surface which is not normally always visible to the user of the vehicle but which is seen occasionally or less regularly than an A-surface. An example of a class B surface is the door sills or door shut faces or the inside of the hood (bonnet).

Optionally, wherein the upper and lower bodyside panels together define at least one door frame and the class B surface extends around at least a portion of the door frame. By defining a portion of the door aperture the class B surface may form a portion of a door sill or shut face of the door reducing the need for trim elements to be connected to the bodyside panel when assembled to the vehicle.

Optionally, wherein the at least two upper pillar regions comprise: an upper A-pillar region, and one of an upper C-pillar region and an upper D-pillar region; and wherein the at least two lower pillar regions comprise: a lower A-pillar region and one of a lower C-pillar region and a lower D-pillar region. By providing an A pillar, B pillar and C or D upper and lower pillar regions the upper and lower regions are joined together to form a bodyside panel assembly with a forward and rearmost pillar region and a B pillar region which may separate two side doors.

Optionally, wherein the upper bodyside panel is a pressed section, and the lower bodyside panel is a pressed section. By providing the upper bodyside panel and/or lower bodyside panel as pressed sections the materials properties may be tailored by work hardening them during a pressing operation.

Optionally, wherein the upper bodyside panel section comprises at least three upper pillar regions, and
the lower bodyside panel comprises at least three lower pillar regions,
and wherein each of the three upper pillar regions is connected to a respective one of the three lower pillar regions to form the pressed bodyside panel assembly.

By providing three upper and lower pillar regions the upper and lower regions are joined together to form a bodyside assembly with a forward and rearmost pillar region and an intermediate or middle pillar region which may separate two side doors.

Optionally, wherein the at least three upper pillar portions comprise: an upper A-pillar region, an upper B-pillar region and one of an upper C-pillar region and an upper D-pillar region. By providing three upper and lower pillar regions the upper and lower regions are joined together to form a bodyside assembly with a forward and rearmost pillar region and an intermediate or middle pillar region which may separate two side doors.

Optionally, wherein the at least three lower pillar portions comprise: a lower A-pillar region, a lower B-pillar region and one of a lower C-pillar region and a lower D-pillar region. By providing three upper and lower pillar regions the upper and lower regions are joined together to form a bodyside assembly with a forward and rearmost pillar region and an intermediate or middle pillar region which may separate two side doors.

Optionally, wherein the upper and lower pillar portions are connected together by any one or more of: a weld, a non-permanent mechanical fastener, adhesive and a permanent mechanical fastener. By joining the upper and lower pillar portions in such a fashion they may be resiliently connected together to reduce the likelihood of the upper and lower pillar portions becoming separated.

According to a further aspect of the invention there is provided vehicle comprising the pressed bodyside panel assembly according to the aspect and/or additional aspect and any embodiment thereof. The vehicle has, at least, the advantages of the aspect and/or embodiment thereof which it comprises.

According to an even further aspect of the invention there is provided a method of manufacturing a pressed bodyside panel assembly comprising:
providing:
   a first sheet and a second sheet; and
the steps of:
   forming an upper bodyside panel comprising at least two upper pillar regions from the first sheet by a first pressing process,
   forming a lower bodyside panel comprising at least two lower pillar regions from the second sheet by a second pressing process, and
   connecting each of the two upper pillar regions to a respective one of the two lower pillar regions to connect the upper bodyside panel to the lower bodyside panel to form the pressed bodyside panel assembly.

By manufacturing the upper bodyside panel and lower bodyside panel in two separate pressing processes greater control of the mechanical properties of the upper and lower bodyside panels can be achieved, moreover the surface quality of either pressing can be controlled to a greater degree resulting in a potentially higher fidelity surface should the pressing wanted by the user require it.

Optionally, wherein the first sheet and second sheet are alloy sheets. Optionally, wherein the alloy sheets are aluminium alloy sheets. By providing alloy sheets and/or aluminium sheets the materials properties of the sheets can be tailored to the specific need of the user.

Optionally, the step of forming the lower body side panel section and/or upper bodyside panel section further comprises forming one or both of a class A surface and class B surface on one or both of the upper bodyside panel and the lower bodyside panel. By forming the class A surface and/or class B surface on the upper and/or lower bodyside panel there may be a reduced number of additional components which need to be attached to the bodyside panel to form the vehicle and provide the aesthetically pleasing surfaces on the vehicle visible to the user during use.

According to an additional further aspect of the invention there is provided a kit of parts comprising the pressed bodyside panel assembly according to the aspect and/or additional aspect and any embodiment thereof. The kit of parts has, at least, the advantages of the aspect and/or embodiment thereof which it comprises.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a schematic isometric view of a vehicle comprising a pressed bodyside panel assembly in accordance with an embodiment of the invention;
Figure 2 shows a side-on view of the vehicle of Figure 1;
Figure 3 shows a schematic view of a pressed bodyside panel assembly in accordance with an embodiment of the invention;
Figure 4 shows the vehicle of Figure 1 and a class A surface located at the front of the vehicle extending from a laterally outer portion of the vehicle to a laterally inner portion of the vehicle;
Figure 5 shows the vehicle of Figure 1 and a class A surface located at the rear of the vehicle extending from a laterally outer portion of the vehicle to a laterally inner portion of the vehicle;
Figure 6A shows an upper bodyside panel in accordance with an embodiment of the invention having a first roof profile;
Figure 6B shows an upper bodyside panel in accordance with an embodiment of the invention having a second roof profile;
Figure 7A shows an additional upper bodyside panel in accordance with an embodiment of the invention having a first roof profile;
Figure 7B shows an additional upper bodyside panel in accordance with an embodiment of the invention having a second roof profile;
Figure 8A shows a further upper bodyside panel in accordance with an embodiment of the invention having a first roof profile;
Figure 8B shows a further upper bodyside panel in accordance with an embodiment of the invention having a second roof profile;
Figure 9 shows a lower bodyside panel in accordance with an embodiment of the invention;
Figure 10 shows an additional lower bodyside panel in accordance with an embodiment of the invention;
Figure 11 shows a further bodyside panel in accordance with an embodiment of the invention;
Figure 12 shows a kit of parts in accordance with an embodiment of the invention;
Figure 13 shows a flow chart describing steps of a method of manufacturing a pressed bodyside panel assembly in accordance with an embodiment of the invention;
Figure 14 shows pictographically certain steps of the flow chart in Figure 13.

### DETAILED DESCRIPTION

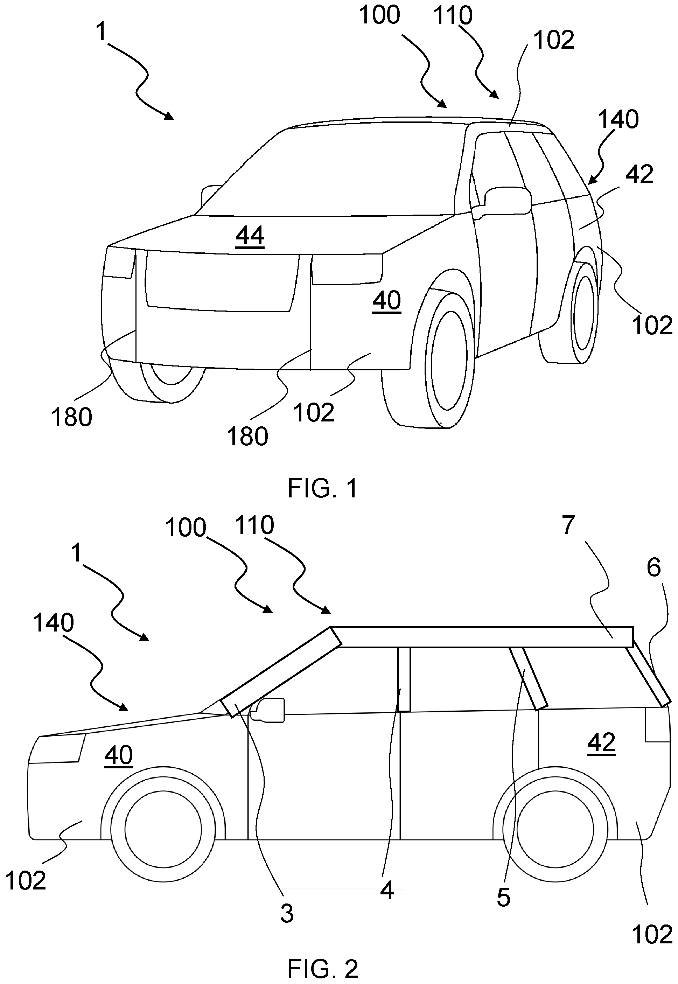

A pressed bodyside panel assembly 100, a vehicle 1 and a method 400 in accordance with an embodiment of the present invention is described herein with reference to the accompanying Figures . As shown in Figures 1 and 2, the pressed bodyside panel assembly 100 is installed in a vehicle 1.

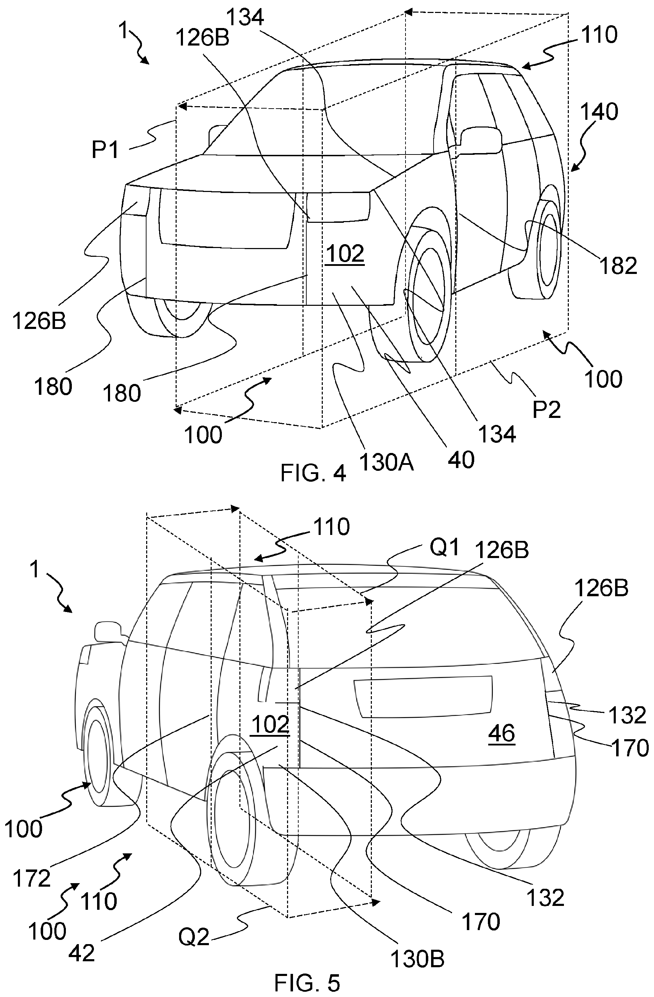

With reference to Figure 1, an isometric schematic view of the vehicle 1 is shown. A side-on view of the vehicle 1 is shown in Figure 2, further views of the vehicle 1 are provided in Figures 4 and 5. The vehicle 1 comprises the pressed bodyside panel assembly 100 (also referred to as the 'assembly' for brevity).

The vehicle 1 is a wheeled passenger vehicle. The passenger vehicle depicted is of the 4x4 or Sports Utility Vehicle ('SUV') type, however the vehicle 1 may be a car (e.g. saloon, estate, hatchback), a van, a light goods vehicle, or other such vehicle.

The vehicle 1 may be a fully electric vehicle having only an electric machine as a power source for propulsion and no internal combustion engine or may be a hybrid vehicle having both an electric machine and an internal combustion engine arranged to propel the vehicle 1. The electric machine is powered by a battery which may be a traction battery or battery module. The vehicle 1 may be a plug-in hybrid electric vehicle (PHEV) or a mild hybrid electric vehicle (MHEV). It shall be appreciated that in alternative embodiments, the vehicle 1 may be a hydrogen electric vehicle (HEV) and hence the electric machine may be powered by a hydrogen fuel cell arrangement comprising one or more hydrogen fuel cells. It shall be appreciated that the following description may be directed to a battery powered electric vehicle and may also apply to a hydrogen electric vehicle or an internal combustion engine (ICE vehicle).

'Forward' for the purpose of this application is taken to mean the direction that the vehicle 1 is facing or traveling in a positive gear (for a manual, i.e. not a Reverse gear) or the Drive gear (for an automatic).

'Rearward' for the purpose of this application is taken to mean the direction that the vehicle 1 is traveling in a Reverse gear (for a manual or for an automatic).

The pressed bodyside panel assembly 100 for the vehicle 1 will now be described with the aid of Figures 1 to 11. The pressed bodyside panel assembly 100 comprises an upper bodyside panel 110 and a lower bodyside panel 140. The upper bodyside panel 110 and lower bodyside panel 140 are discrete components which are connected together at two or more upper pillar regions 112, 114, 116, 118 and respective lower pillar regions 142, 144, 146, 148 to form the pressed bodyside panel assembly 100.

The upper bodyside panel 110 may be a pressed section. The lower bodyside panel 140 may be a pressed section.

During assembly of the vehicle 1, the assembly 100 is attached to a frame (not shown) of the vehicle 1. The vehicle 1 includes two assemblies 100, one for each side of the vehicle 1. Each pressed bodyside panel assembly 100 is attached to the frame during assembly of the vehicle 1. The assemblies 100 form a part of the side structure of the vehicle 1 and may define apertures for windows and/or doors as will be discussed in more detail below.

The assemblies 100 may be handed or mirror images of each other. For reasons of brevity only one assembly 100 will be described herein, in this case a 'left side' pressed bodyside panel assembly 100. Left in this instance referring to the left-side of the vehicle 1. The left side of the vehicle 1 is to the left of a driver when seated in a driver's seat of the vehicle and the driver is facing forward. The left side of the vehicle is shown in Figure 2 with the perspective of the observer facing the left side of the vehicle 1.

As will be apparent to the skilled reader, the present disclosure of the bodyside panel assembly 100 is not limited to only a left-hand-side pressed bodyside panel assembly 100 but is equally applicable to a right-hand-side pressed bodyside panel assembly 100.

The terms A pillar 3, B pillar 4, C pillar 5, D pillar 6 and cantrail 7 are terms of art and known to the skilled reader who would understand their positions and locations on the vehicle 1.

On a typical vehicle the pillars (A pillar 3, B pillar 4, C pillar 5, D pillar 6) are structural parts of the vehicle 1 that extend from the roof of the vehicle to another part of the vehicle structure. For example:
an A pillar 3 is the forward most of the pillars. The A pillar 3 forms a member that may at least partially locate and support the windscreen in use;
a B pillar 4 is a pillar that is located in the vehicle's 1 mid-section and is between the A pillar 3 and C 5 or D pillars 6. In a four or five door vehicle the B pillar 4 is located at or near the rearward edge of a front driver/passenger doors and at or near the forward edge of a rear passenger doors;
a C pillar 5 is a pillar that is located rearwardly of the B pillar 4. Where there is a D pillar 6 the C pillar 5 is located between the B pillar 4 and the D pillar 6. In a two or three door vehicle the C pilar 5 is located at or near the rearward edge of the driver/passenger doors. In a four or five door vehicle the C pillar 5 is located at or near the rearward edge of the rear passenger door; and
a D pillar 6 is a pillar that is the most rearwardly pillar. The D pillar 6 may support the rear window or be located adjacent the rear hatch aperture.

As will be apparent the pillars named alphabetically by placement order from the most forwardly pillar (the A pillar 3) to the most rearwardly (the D pillar 6).

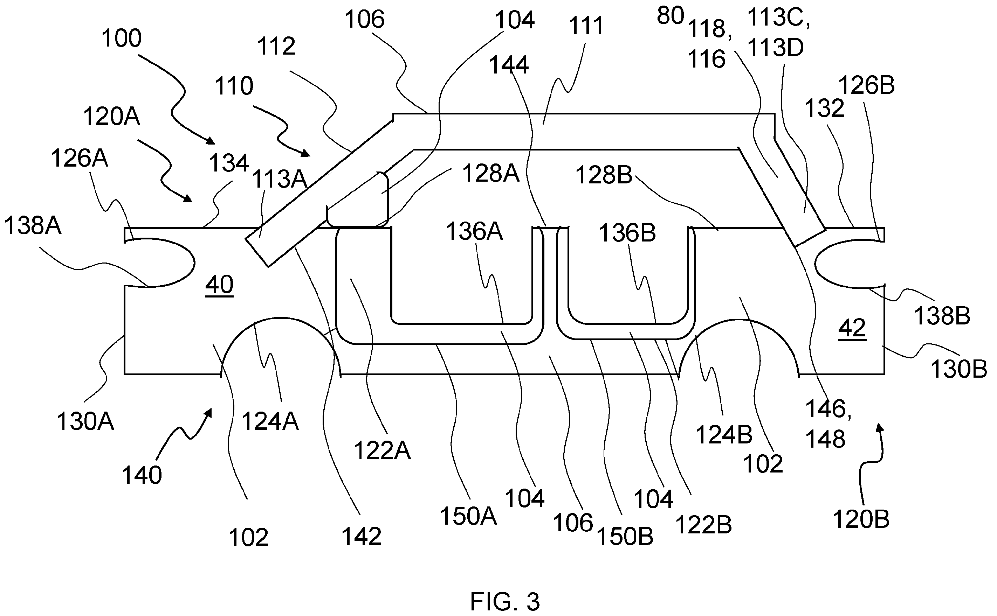

Vehicles may have one or the other of an C pillar 5 and a D pillar 6 as in Figures 3, 6 and 7. Alternatively, as is the case in Figures 1 and 2 and 8, a vehicle 1 may have both a C pillar 5 and a D pillar 6.

The cantrail 7 forms a portion of the side wall of the vehicle 1, the cantrail is located at the junction between the roof of the vehicle 1 and is connected to one or more of the A-D pillars.

The assembly 100 may define one or more class A surfaces 102, class B surfaces 104, and/or class C surfaces 106.

A class A surface 102 is a surface which is normally visible during use. For example, an outer surface of the vehicle 1 such as the front fender 40 or rear fender 42 which will be visible during normal use of the vehicle 1.

A class B surface 104 is a surface which is intermittently visible during normal use of the vehicle 1. An example of a class B surface 104 may be a door trim or boot liner of a vehicle.

A class C surface 106 by comparison to a class A or B surface is not normally visible during normal use of the vehicle 1. A class C surface 106 is generally hidden behind or by another component, for example a trim panel or furnishing. An example of a class C surface may be an inner surface of trim panel or an inner surface of a door panel.

The upper bodyside panel 110 comprises two or more upper pillar regions 112, 114, 116, 118. The upper pillar regions define a portion of one of the A-D pillars 3-6. The upper pillar region 112, 114, 116, 118 may be one or more of a landing area for connection to the lower pillar region 142, 144, 146, 148, a part of the upper pillar region 112, 114, 116, 118.

The lower bodyside panel 140 comprises two or more lower pillar regions 142, 144, 146, 148. The upper pillar regions define a portion of one of the A-D pillars 3-6. The lower pillar region 142, 144, 146, 148 may be one or more of a landing area for connection to the upper pillar region 112, 114, 116, 118 and a part of the upper pillar region 142, 144, 146, 148.

The upper pillar region 112 and lower pillar region 142 together form the A pillar 3.

The upper pillar region 114 and lower pillar region 144 together form the B pillar 4.

The upper pillar region 116 and lower pillar region 146 together form the C pillar 5.

The upper pillar region 118 and lower pillar region 148 together form the D pillar 6.

Figure 3 shows the assembly 100 in more detail with the upper bodyside panel 110 connected to the lower bodyside panel 140. In the assembly 100 shown in Figure 3 the assembly 100 comprises an upper bodyside panel 110 having an upper pillar region 112 and either an upper pillar region 116 or 118 (i.e. a lower portion of the A pillar 3 and a lower portion of the C pillar 5 or D pillar 6). **The** lower bodyside panel 140 of assembly 100 shown in Figure 3 likewise has a lower pillar region 142 and a corresponding upper pillar region 146 or 148 corresponding to the lower pillar region 116 or 148.

The lower bodyside panel 140 has one or more class A surfaces 102 which may be formed during a pressing operation of the lower bodyside panel 140. The class A surfaces 102 are on an outer surface of the lower bodyside panel 140.

The class A surface 102 may be a fender 40 and/or fender 42 as shown in Figure 3. In Figure 3 the assembly 100 has two class A surfaces 102 one on a front fender 40 and one on a rear fender 42. Alternatively, only one fender 40 or fender 42 may be present or only a portion of a fender 40, 42 may be present on assembly 100. Alternative lower bodyside panels 140, 240, 340 will be discussed in more detail below.

The lower bodyside panel 140 defines a front lower bodyside region 120A and/or a rear lower bodyside region 120B as shown in Figure 3.

The front lower bodyside region 120A is defined by: a door region 122A, a wheel arch region 124A, a vehicle light region 126A, a waistline split region 128A, a bumper region 130A, and a bonnet region 134.

The door region 122A defines a portion of a door aperture 136A. The door aperture 136A in use has a door located within it. The door region 122A may be a front driver's side door or a front passenger side door. Where the vehicle 1 comprises only two doors (such as a coupe) or three doors (such as a hatchback with two side doors and a large rear hatch to access the boot/trunk) the door region 122A may be the sole door region present on the lower bodyside panel 140. Where the vehicle 1 comprises four or more doors there may be an additional door region 122B either as part of the front lower bodyside region 120A or as part of the rear lower bodyside region 120B as discussed below.

The wheel arch region 124A defines a portion of a front wheel arch of the vehicle 1. In use, a wheel is located at least partially within the wheel arch and said wheel is able to rotate within the wheel arch.

The vehicle light region 126A defines a region for receipt of a forward vehicle light. The forward vehicle light may be a vehicle lighting assembly. The vehicle lighting assembly may comprise any one or combination of: a running light, a dipped headlight, a full beam headlight, a fog light, a hazard warning light, and an indicator. The vehicle lighting assembly may comprise any one or combination of: a light emitting diode (LED) light or a halogen light or a xenon light or a high intensity discharge light.

The waistline split region 128A is a demarcation or crease on the bodyside panel 110. The waistline split region 128A may alternatively be known as a 'split line' in the art. The waistline split region may improve vehicle performance by splitting the air passing over the lower bodyside region 120A and may improve traction and may reduce lift. Optionally, the waistline split region 128A may be a line, a demarcation or a crease defined by the connection between the upper and lower pressed bodyside panels 110, 140

The bumper region 130A is a region of the front lower bodyside region 120A that is in use is located adjacent to or abuts a bumper of the vehicle 1 (not shown).

The bonnet region 134 is a region of the front lower bodyside region 120A that in use is located adjacent to or abuts a bonnet 44 of the vehicle 1.

The front lower bodyside region 120A comprises the class A surface 102 as shown in Figures 3 and 4. The class A surface 102 may extend unbroken across the whole front lower bodyside region 120A.

A frontward edge 180 of the class A surface 102 is parallel or substantially parallel to a plane P2 that includes a laterally outermost portion 182 of the class A surface 102 as is shown in Figure 4. Optionally only a portion of the frontward edge 180 is parallel or substantially parallel to the to the plane P2.

The frontward edge 180 depicted in Figure 4 may be an edge of the bumper region 130A. In alternative arrangements the frontward edge 180 may form a part of a different region of the front lower bodyside region 120A, for example, it may be a part of the bonnet region 134 or vehicle light region 126A or waistline split region 128A.

As shown in Figure 4 the frontward edge 180 lies on a plane P1. The plane P1 is parallel or substantially parallel to the plane P2. Optionally only a portion of the frontward edge 180 may lie on the plane P1.

The frontward edge 180 may additionally be the laterally innermost portion of the class A surface 120 and/or a laterally innermost edge of the class A surface 120.

The class A surface may curve between the frontward edge 180 and the laterally outermost potion 182.

The laterally outermost portion 182 may be located on the door region 122A, the wheel arch region 124A the bonnet region 134 or any other lateral region of the class A surface. In Figure 4 the laterally outermost portion 182 is shown as part of the door region 122A.

Optionally, the lower bodyside region 120A comprises the only Class A surface 120 of the lower bodyside panel 140 or of the pressed bodyside panel assembly 100.

The rear lower bodyside region 120B is defined by: a door region 122B, a wheel arch region 124B, a vehicle light region 126B, a waistline split region 128B, a bumper region 130B, and a tailgate region 132.

The door region 122B defines a portion of a door aperture 136B. The door aperture 136B in use has a door located within it. The door region 122B may be a rear driver's side door or a rear passenger side door. Where the vehicle 1 comprises only two doors (such as a coupe) or three doors (such as a hatchback with two side doors and a large rear hatch to access the boot/trunk) the door region 122B may be the sole door region present on the lower bodyside panel 140. Where the vehicle 1 comprises four or more doors there may be an additional door region 122B either as part of the rear lower bodyside region 120A or as part of the front lower bodyside region 120A.

The wheel arch region 124B defines a portion of a rear wheel arch of the vehicle 1. In use, a wheel is located at least partially within the wheel arch and said wheel is able to rotate within the wheel arch.

The vehicle light region 126B defines a region for receipt of a rear vehicle light. The rear vehicle light may be a vehicle lighting assembly. The vehicle lighting assembly may comprise any one or combination of: a fog light, a brake light, a tail light, a hazard warning light, a parking light, an indicator, and a reverse light. The vehicle lighting assembly may comprise one or more light emitting diodes (LED).

**The** waistline split region 128B is a demarcation or crease on the bodyside panel 110. **The** waistline split region 128B may alternatively be known as a 'split line' in the art. **The** waistline split region may improve vehicle performance by splitting the air passing over the lower bodyside region 120B and may improve traction and may reduce lift. Optionally, the waistline split region 128B may be a line, a demarcation or a crease defined by the connection between the upper and lower pressed bodyside panels 110, 140.

**The** bumper region 130B is a region of the rear lower bodyside region 120B that is in use is located adjacent to or abuts a bumper of the vehicle 1 (not shown).

**The** tailgate region 132 is a region of the rear lower bodyside region 120B that in use is located adjacent to or abuts a tailgate 46 of the vehicle 1.

A rearward edge 170 of the class A surface 102 is parallel or substantially parallel to a plane Q2 that includes a laterally outermost portion 172 of the class A surface 102 as is shown in Figure 5. Optionally only a portion of the rearward edge 170 is parallel or substantially parallel to the to the plane Q2.

The rearward edge 170 depicted in Figure 5 may be an edge of the bumper region 130B. In alternative arrangements the rearward edge 170 may form a part of a different region of the front lower bodyside region 120B, for example, it may be a part of the tailgate region 132 or vehicle light region 126B or waistline split region 128B.

As shown in Figure 5 the rearward edge 170 lies on a plane Q1. The plane Q1 is parallel or substantially parallel to the plane Q2. Optionally only a portion of the rearward edge 170 may lie on the plane Q1.

The rearward edge 170 may additionally be the laterally innermost portion of the class A surface 120 and/or a laterally innermost edge of the class A surface 120.

The class A surface may curve between the rearward edge 170 and the laterally outermost potion 172.

The laterally outermost portion 172 may be located on the door region 122A, the wheel arch region 124A the bonnet region 134 or any other lateral region of the class A surface. In Figure 4 the laterally outermost portion 172 is shown as part of the door region 122A.

Optionally, the rear lower bodyside region 120B comprises the only Class A surface 120 of the lower bodyside panel 140 or of the pressed bodyside panel assembly 100.

Optionally, where both the front and rear lower bodyside regions 120A, 120B comprise a class A surface 120 each the frontward edge 170 and rearward edge 180 may be aligned on the same plane P1 or Q1 or planes P1 and Q1 may be parallel or substantially parallel.

An outer surface of the upper bodyside panel 110 and lower bodyside panel 140 define a class B surface 104 as shown in Figure 3. Alternatively, only the upper bodyside panel 110 may define the class B surface 104 or only the lower bodyside panel 140 may define the class B surface 104. Optionally, there may be multiple class B surfaces 104 on the assembly 100. The connection of the upper and lower bodyside panel 110, 140 may together define one or more class B surfaces 104, and one or more other class B surfaces 104 may only be defined on the lower bodyside panel 140 and/or the upper bodyside panel 110.

The class B surface 104 may be a portion of a door frame 150A, 150B and the class B surface 104 forms a portion of the door frame 150A, 105B or extends around at least a portion of the door frame 150A, 150B. The door frame 150A is for a front door and the door frame 150B is for a rear door. Where the vehicle 1 has fewer doors (e.g. a two or three door vehicle 1) only the door frame 150A may be provided.

The class B surface 104 may form a part of a door sill or be a door sill.

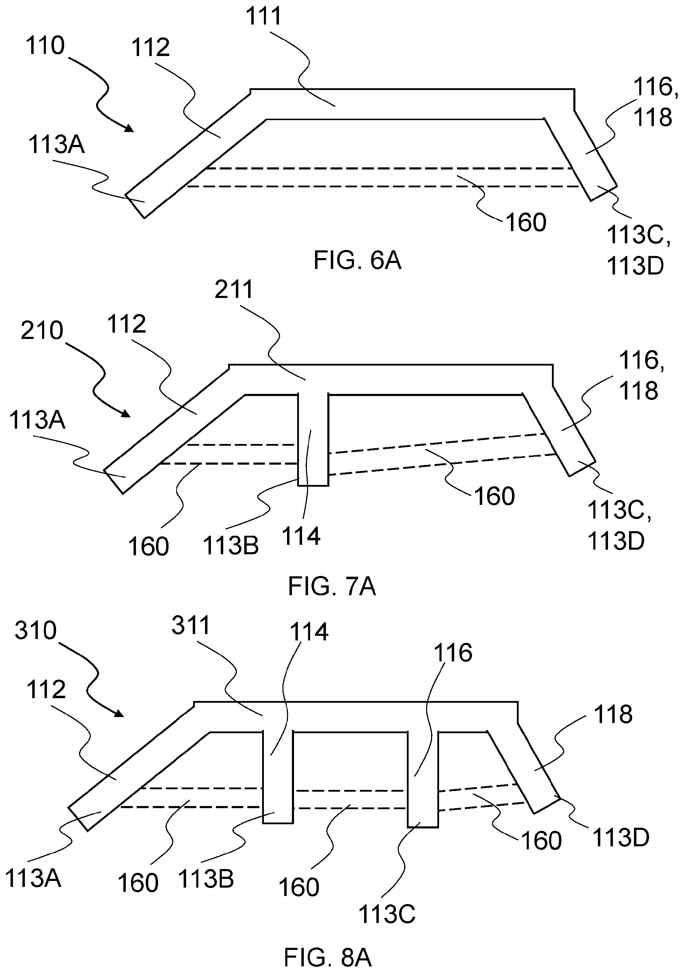

Figure 6A shows the upper bodyside panel 110 is more detail disconnected from the lower bodyside panel 140. The upper bodyside panel 110 may be connected to any lower bodyside panel 140 described herein.

The upper bodyside panel 110 as previously described has two upper pillar regions 112, 116 or 118.

Each of the upper pillar regions 112, 116, 118 has an upper part 113A, 113C or 133D of a first connection arrangement. Each upper pillar region 112, 116, 118 is configured to connect to a lower part 142, 146 or 148 on the lower bodyside panel 140 to form the first connection arrangement. The lower parts 142, 146 or 148 are the lower pillar regions 142, 146 or 148.

Each upper part 133A, 113C or 113D can overlap with its corresponding lower part 142, 146 or 148.

The connection may be made by any one of a: weld, a non-permanent mechanical fastener, adhesive and a permanent mechanical fastener. A non-permanent mechanical fastener may be a bolt or screw. A permanent mechanical fastener may be a rivet or pop-rivet. A weld may be a spot weld or a bracket inter-weld.

The connection of the upper bodyside panel 110 and lower bodyside panel 140 is shown in Figure 3.

The upper bodyside panel 110 may have one or more supports 160 extending between the two upper pillar regions 112, 116 or 118. The supports 160 are shown in dashed lines. The supports 160 are removable and may be formed when the upper bodyside panel 110 is pressed from a sheet material, e.g. pressed sheet 500. The supports 160 may be unitary with the upper bodyside panel 110. The support(s) 160 provide strength to the upper bodyside panel 110 whilst it is being manipulated or moved, for example from a press to a storage location. The supports 160 may be cut off prior to connection of the upper bodyside panel 110 to the lower bodyside panel 140.

The upper bodyside panel 110 has a first configuration. The first configuration being a first roof profile 111. The first roof profile 111 comprises two or more parameters relating to dimensions of the first roof profile 111. The parameters may be any one of: a length of the roof, a depth of the roof, a dimension of a pillar, a dimension of an A pillar, a dimension of a C pillar, a dimension of a D pillar, a rake of the roof, an angle of inclination of the roof.

The first roof profile 111 may is suitable for a vehicle 1 selected from any one or more of: a sedan, an estate, a coupe, a hatchback, a fastback, a minivan, a station wagon, a Sports Utility Vehicle, a Multi Utility Vehicle, a Cross Utility Vehicle, a grand tourer vehicle, and a shooting brake.

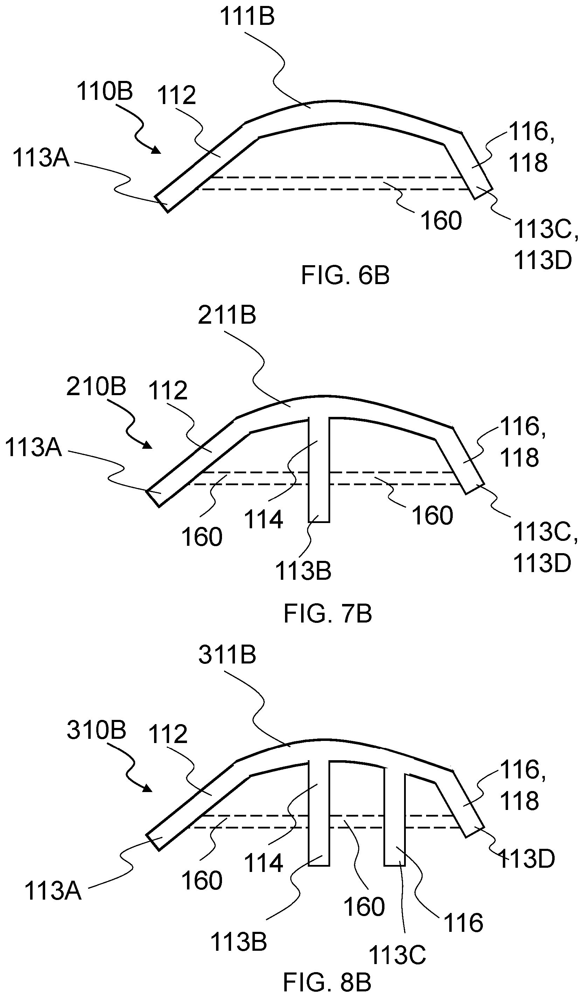

An additional upper bodyside panel 110B is shown in Figure 6B. The upper bodyside panel 110B is substantially similar to the upper bodyside panel 110 of Figure 6A apart from the upper bodyside panel 110B has a different, second, roof profile 111B. The second roof profile 111B is different to roof profile 111 as can be seen by comparing the Figures 6A and 6B.

Either upper bodyside panel 110 or 110B may be connected to the lower bodyside panel 140, 240, 340. As such, the designer of a vehicle is offered greater flexibility when designing a vehicle. The designer may choose a single 'common' lower bodyside panel 140, 240, 340 and select one of two or more upper bodyside panels 110, 110B, 210, 210B, 310, 310B, etc... The ability to utilise a common lower bodyside panel 140, 240, 340 across various vehicle platforms may reduce tooling costs when a new vehicle roof profile is required by the design brief the designers are working to.

An additional upper bodyside panel 210 is shown in Figure 7A. The upper bodyside panel 210 is substantially the same as the upper bodyside panel 110 except that the upper bodyside panel 210 further comprises a B pillar upper pillar region 114 and the corresponding upper part 113B of the B pillar.

The upper bodyside panel 210 has the same or similar first roof profile 211 as the previously described first roof profile 111. The parameters of the first roof profile 211 may additionally comprise a dimension of an B pillar 114.

An additional upper bodyside panel 210B is shown in Figure 7B. The upper bodyside panel 210B is substantially similar to the upper bodyside panel 210 of Figure 7A apart from the upper bodyside panel 210B has the second roof profile 211B.The second roof profile 211B is substantially the same as the second roof profile 111B. The parameters of the second roof profile 211B may additionally comprise a dimension of a B pillar 114.

An additional upper bodyside panel 310 is shown in Figure 8A. The upper bodyside panel 310 is substantially the same as the upper bodyside panel 210 except that the upper bodyside panel 310 has both a C pillar region 116 and a D pillar region 118. The upper bodyside panel 310 therefore has the corresponding C pillar upper part 113C and corresponding D pillar upper part 113D.

The upper bodyside panel 113D has the same or similar first roof profile 311 as the previously described first roof profile 211. The first roof profile 311 may additionally comprises both a dimension of a C pillar 116 and a dimension of a D pillar 118.

An additional upper bodyside panel 310B is shown in Figure 8B. The upper bodyside panel 310B is substantially similar to the upper bodyside panel 310 of Figure 8A apart from the upper bodyside panel 310B has the second roof profile 311B.The second roof profile 311B is substantially the same as the second roof profile 111B, The parameters of the second roof profile 311B may additionally comprises both a dimension of a C pillar 116 and a dimension of a D pillar 118.

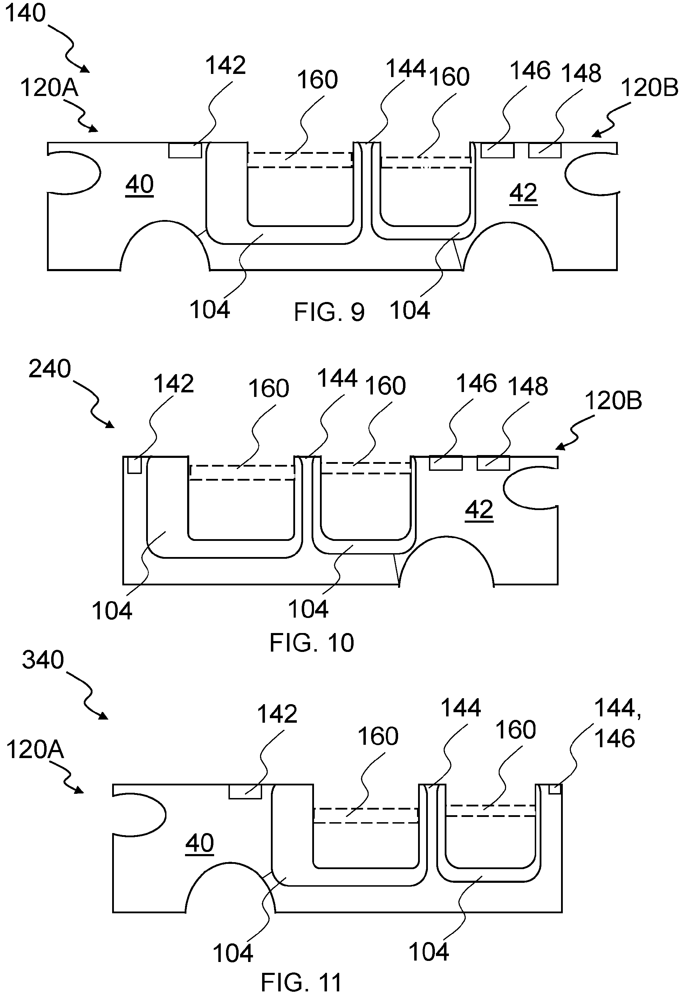

The lower bodyside panel 140 of Figure 3 is shown in more detail in Figure 9 with the upper bodyside panel 110, 110B, 210, 210B, 310, 310B disconnected. As can be seen in Figure 9 the lower bodyside panel 140 has two lower bodyside regions 120A, 120B. Other configurations may only have one lower bodyside region 120A or 120B as discussed below.

The lower bodyside panel 140 has at least two lower pillar regions 142, 144, 146, 148. The number and type of lower pillar regions 142, 144, 146, 148 may correspond to the number and type of upper pillar regions 112, 114, 116, 118 and the upper parts 113A, 113B, 113C, 113D on the upper bodyside panel 110, 110B, 210, 210B, 310, 310B. As such, whilst all four lower pillar regions 142, 144, 146, 148 are shown on Figure 9 only a subset may be present, for example lower pillar regions 142 and 146 or 148 may be the only lower pillar regions present.

The lower bodyside panel 140 may have supports 160 extending between portions of the lower bodyside panel 140 that are formed when the lower bodyside panel 140 is pressed from a sheet material, e.g. pressed sheet 502. The supports 160 may be removed during assembly or before assembly as previously described with reference to the upper bodyside panel 110.

An additional lower bodyside panel 240 is shown in Figure 10. The lower bodyside panel 240 shares a number of common features with the lower bodyside panel 140 discussed previously, as such, only differences between the lower bodyside panel 240 and the lower bodyside panel 140 will be discussed.

The lower bodyside panel 240 comprises only one lower bodyside region, in this case lower bodyside region 120B as shown in Figure 10. The lower bodyside region 120B may be a rear fender 42.

An additional lower bodyside panel 340 is shown in Figure 11. The lower bodyside panel 340 shares a number of common features with the lower bodyside panel 140 discussed previously, as such, only differences between the lower bodyside panel 340 and the lower bodyside panel 140 will be discussed.

The lower bodyside panel 340 comprises only one lower bodyside region 120A, in this case lower bodyside region 120A as shown in Figure 10. The lower bodyside region 120A may be a front fender 40.

Any one of the lower bodyside panels 140, 240, 340 may be connected to any one of the previously described upper bodyside panels 110, 110B, 210, 210B, 310, 310B. The lower bodyside panels 140, 240, 340 are a 'common' lower bodyside panel 140, 240, 340 enabling connection to either an upper bodyside panel having a first roof profile 110, 210, 310 (and therefore to form the first configuration) or an upper bodyside panel having a second roof profile 110B, 210B, 310B (and therefore to form the second configuration).

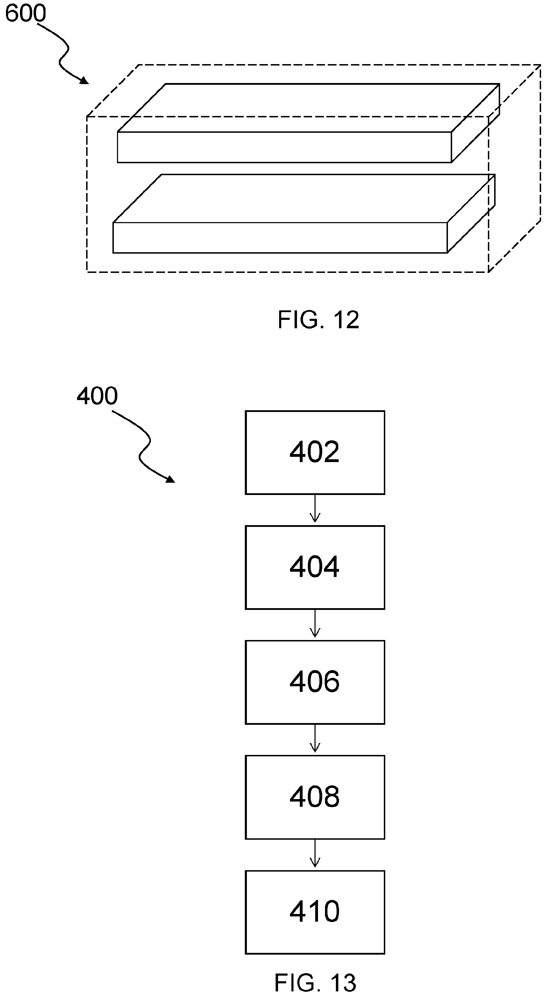

A kit of parts 600 is now described with the aid of Figure 12. The kit of parts 600 comprises any one of the common lower bodyside panels 140, 240, 340 and a first upper bodyside panel having a first configuration 110, 210, 310 and at least two upper pillar regions 112, 114, 116, 118. Alternatively, the kit of parts 600 comprises any one of the common lower bodyside panels 140, 240, 340 and a second upper bodyside panel 110B, 210B, 310B having a second configuration different to the first configuration and at least two upper pillar regions 112, 114, 116, 118.

In either case, both the first upper bodyside panel 110, 210, 310 or the second upper bodyside panels 110B, 210B, 310B are connectable to the common lower bodyside 140, 240, 340 at the respective upper and lower pillar regions 112, 114, 116, 118, 142, 144, 146, 148 to form bodyside panel assemblies 100 having different configurations.

The kit of parts 600 may comprise the upper and/or lower bodyside panels 110, 110B, 140, 210, 210B, 240, 310, 310B, 340 with the supports 160 in place or removed.

The upper and lower bodyside panels 110, 110B, 140, 210, 210B, 240, 310, 310B, 340 are provided disconnected in the kit of parts.

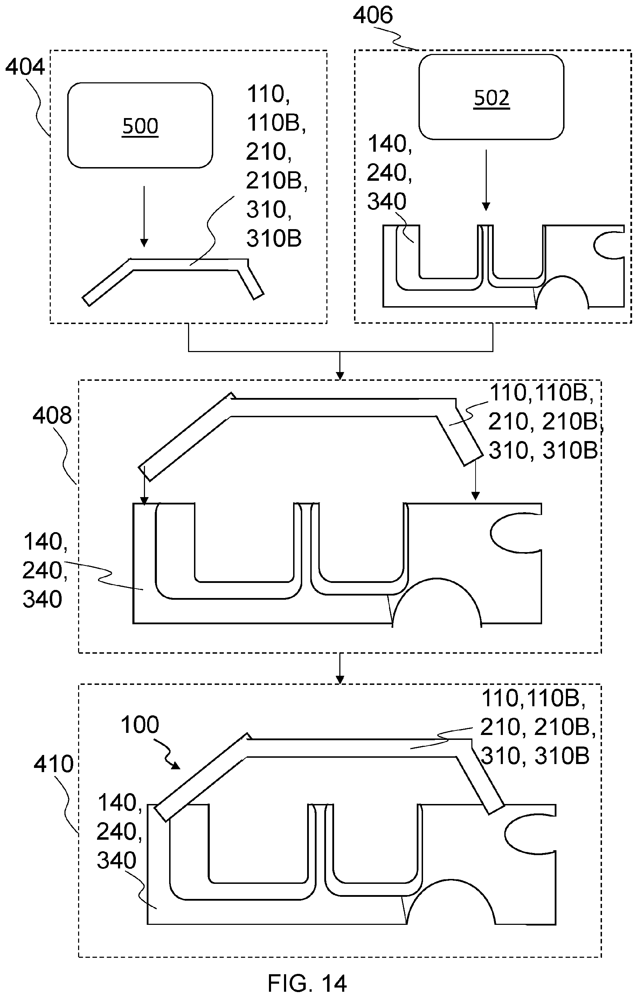

A method 400 of manufacturing a pressed bodyside panel assembly 100 will now be described with the aid of Figures 13 and 14. Figure 13 shows a flowchart 400 describing a number of method steps. Figure 14 shows a pictorial representation of a number of the method steps of method 400. The method 400 provides a technique whereby an upper bodyside panel 110, 210, 310, 110B, 210B, 310B connected to a lower bodyside panel 140, 240, 340.

At step 402 there is provided a first sheet 500 and a second sheet 502.The sheets 500, 502 are shown in Figure 14. The sheets 500, 502 are metal sheets, the metal sheets may be alloy sheets. The alloy sheets may be aluminium alloy sheets.

Subsequently at step 404 the first sheet 500 is formed into any one of the previously described upper bodyside panel 110, 210, 310, 110B, 210B, 310B. Optionally, the upper bodyside panel 110, 210, 310, 110B, 210B, 310B may have supports 160 formed during the same forming step. The supports 160 and the rest of the upper bodyside panel 110, 210, 310, 110B, 210B, 310B are unitary. This forming step is shown in Figure 14. In Figure 14 there are no supports 160 shown because no supports 160 are provided or the supports 160 have been removed already.

Optionally the step of forming the upper bodyside panel 110, 210, 310, 110B, 210B, 310B from the first sheet 500 may comprise forming one or both of a class A surface 102 and a class B surface 104. The class A surface 102 may be any class A surface previously described. The class B surface 104 may be any previously described class B surface such as a door sill or portion of the door aperture 136A, 136B.

At step 406 the second sheet 502 is formed into any one of the previously described lower bodyside panels 140, 240, 340 (a common lower bodyside panel 140, 240, 340). Optionally, the lower bodyside panel 140, 240, 340 may have supports 160 formed during the same forming step. The supports 160 and the rest of the lower bodyside panel 140, 240, 340 are unitary. This forming step is shown in Figure 14. In Figure 14 there are no supports 160 shown because no supports 160 are provided or the supports 160 have been removed already.

Optionally the step of forming the lower bodyside panel 140, 240, 340 from the second sheet 502 may comprise forming one or both of a class A surface 102 and a class B surface 104. The class A surface 102 may be any one previously described such as a lower bodyside region 120A, 120B, fender 40, 42 or combination thereof. The class B surface 104 may be any previously described class B surface such as a door sill or portion of the door aperture 136A, 136B.

Steps 404 and 406 may occur at the same time as each other, or step 404 may occur before step 406 or step 406 may occur before step 404. Step 404 and step 406 may occur independently of each other.

Subsequently, after both steps 404 and 406 a step 408 occurs. Step 408 comprises connecting each of the two upper pillar regions 112, 114, 116, 118 to a respective one of the two lower pillar regions 142, 144, 146, 148 to connect the upper bodyside panel to the lower bodyside panel to form the pressed bodyside panel assembly.

The connection may be made by any one of a: weld, a non-permanent mechanical fastener, adhesive and a permanent mechanical fastener. A non-permanent mechanical fastener may be a bolt or screw. A permanent mechanical fastener may be a rivet or pop-rivet. A weld may be a spot weld or a bracket inter-weld.

Optional step 410 shows the assembly 100 after the upper and lower bodyside panels have been connected.

In the pictorial representation of Figure 14 an upper bodyside panel 110 is connected to a lower bodyside panel 240, however as indicated in Figure 14 any upper bodyside panel 110, 210, 310, 110B, 210B, 310B may be connected to any lower bodyside panel 140, 240, 340.

It will be appreciated that various changes and modifications can be made to the present invention without departing from the scope of the present application.

## Claims

1. A pressed bodyside panel assembly for a vehicle comprising:
an upper bodyside panel being a pressed section and comprising at least two upper pillar regions, and
a lower bodyside panel being a pressed section and comprising at least two lower pillar regions,
the upper bodyside panel and lower bodyside panel are discrete, and
wherein each of the two upper pillar regions is connected to a respective one of the two lower pillar regions to form the pressed bodyside panel assembly.

2. The pressed bodyside panel assembly of claim 1, wherein the lower bodyside panel includes a class A surface.

3. The pressed bodyside panel assembly of claim 2, wherein the class A surface is a fender.

4. The pressed bodyside panel assembly of claim 2 or 3, wherein lower bodyside panel has a lower bodyside region defined by:
a door region,
a wheel arch region,
a vehicle light region,
a waistline split region,
a bumper region, and
one of a tailgate region or a bonnet region.

5. The pressed bodyside panel assembly of claim 4, wherein the lower bodyside region comprises the A-surface.

6. The pressed bodyside panel assembly of claim 5, wherein the class A surface extends unbroken across the whole lower bodyside region.

7. The pressed bodyside panel assembly of claim 5 or 6, wherein the vehicle light region comprises an aperture for receipt of a portion of a vehicle lighting assembly in use, and the class A surface surrounds or partially surrounds the aperture.

8. The pressed bodyside panel assembly of claim 5 or 6 or 7, wherein a rearward edge of the class A surface is parallel to a plane including a laterally outermost portion of the class A surface.

9. The pressed bodyside panel assembly of any preceding claim, wherein one or both of an outer surface of the upper bodyside panel and lower bodyside panel define a class B surface.

10. The pressed bodyside panel assembly of claim 9, wherein the upper and lower bodyside panels together define at least one door frame and the class B surface extends around at least a portion of the door frame.

11. The pressed bodyside panel assembly of any preceding claim, wherein the at least two upper pillar regions comprise: an upper A-pillar region, and one of an upper C-pillar region and an upper D-pillar region; and wherein the at least two lower pillar regions comprise: a lower A-pillar region and one of a lower C-pillar region and a lower D-pillar region.

12. The pressed bodyside panel assembly of any preceding claim, wherein the upper bodyside panel section comprises at least three upper pillar regions, and
the lower bodyside panel comprises at least three lower pillar regions,
and wherein each of the three upper pillar regions is connected to a respective one of the three lower pillar regions to form the pressed bodyside panel assembly.

13. A vehicle comprising the pressed bodyside panel assembly according to any preceding claim.

14. A method of manufacturing a pressed bodyside panel assembly comprising:
providing:
a first sheet and a second sheet; and
the steps of:
forming an upper bodyside panel comprising at least two upper pillar regions from the first sheet by a first pressing process,
forming a lower bodyside panel comprising at least two lower pillar regions from the second sheet by a second pressing process, and
connecting each of the two upper pillar regions to a respective one of the two lower pillar regions to connect the upper bodyside panel to the lower bodyside panel to form the pressed bodyside panel assembly.
